# EUROPÄISCHE PATENTANMELDUNG

(11) **EP 2 267 307 A1**
(43) Veröffentlichungstag der Anmeldung: **29.12.2010**
(21) Anmeldenummer: 09163548.2
(22) Anmeldetag: 24.06.2009
(51) Int. Cl.: F03G 7/06

(54) **Aktor für Wärmekraftmaschine**

(71) Anmelder: Kempf, Hubert, 86971 Peiting (DE)
(72) Erfinder: Kempf, Hubert, 86971 Peiting (DE)
(74) Vertreter: Caspary, Karsten

(57) **Zusammenfassung**

Es wird ein Aktor zur Umwandlung von thermischer in kinetische Energie bereitgestellt, umfassend einen Arbeitszylinder (1) mit einem Gehäuse (3) mit einem Einlass (5) und einem Auslass (7) für ein Arbeitsfluid, mindestens einem Dehnstoffelement (15), das eine Umhüllung, einen Dehnstoff und eine Kolbenstange (17) aufweist, wobei das Dehnstoffelement (15) zumindest teilweise von dem Arbeitsfluid (14) umgeben ist, und einem Arbeitskolben (19), der axial aus dem Arbeitszylinder (1) heraus und in denselben hinein bewegbar ist, eine erste Arbeitsfluidquelle, die dazu eingerichtet ist, Arbeitsfluid (14) einer ersten Temperatur bereit zu stellen, eine zweite Arbeitsfluidquelle, die dazu eingerichtet ist, Arbeitsfluid (14) einer um eine vorbestimmte Temperaturdifferenz niedrigeren zweiten Temperatur bereit zu stellen, eine Vorlaufleitung (9), die an ihrem einen Ende mit der ersten oder der zweiten Arbeitsfluidquelle verbindbar und an ihrem anderen Ende mit dem Arbeitszylinder (1) verbunden ist, eine Rücklaufleitung (11), die an ihrem einen Ende mit dem Arbeitszylinder (1) und an ihrem anderen Ende mit einer Arbeitsfluidsenke verbunden ist, eine Steuerungseinrichtung, die dazu eingerichtet ist, den Fluidfluss aus der ersten oder der zweiten Arbeitsfluidquelle in den und aus dem Arbeitszylinder (1) zu steuern, wobei sich durch abwechselndes Zuführen von Arbeitsfluid (14) aus der ersten oder der zweiten Arbeitsfluidquelle in den Arbeitszylinder (1) das mindestens eine Dehnstoffelement (15) von dem Arbeitsfluid (14) umgeben wird und dadurch eine Hin- und Herbewegung des Arbeitskolbens (19) bewirkt wird.

## Beschreibung

Die vorliegende Erfindung betrifft einen Aktor zur Umwandlung von thermischer in kinetische Energie und eine Wärmekraftmaschine, die eine Mehrzahl derartiger Aktoren verwendet.

Wärmekraftmaschinen, die sich die Temperaturdifferenz zweier Bereiche zunutze machen, um daraus mechanische bzw. kinetische Energie zu erzeugen, wie z. B. der Anfang des 19. Jahrhunderts vorgestellte Stirlingmotor, sind seit langem bekannt. Üblicherweise arbeitet ein Stirlingmotor mit einem Arbeitsgas, das stark erhitzt werden muss, so dass der Stirlingmotor einen hohen Wirkungsgrad erzielt. Je geringer die Temperaturdifferenz, desto schlechter ist der Wirkungsgrad des Stirlingmotors. Zwar wurden auch Stirlingmotoren für kleine Temperaturdifferenzen entwickelt, z. B. von Prof. Ivo Colin 1982, derartige Konstruktionen sind jedoch komplex und haben sich deshalb nicht durchgesetzt.

Bei hohen Temperaturdifferenzen kommen moderne Gasturbinen zum Einsatz, die einen relativ hohen Wirkungsgrad aufweisen. Im privaten Bereich oder im Bereich kleiner industrieller Anlagen fallen jedoch häufig als Zwischen- oder Abfallprodukte Fluide oder Flüssigkeiten an, die, bezogen auf eine normale Raumtemperatur, d.h. zwischen 10°C und 25°C, eine um eine geringe Temperaturdifferenz erhöhte oder erniedrigte Temperatur aufweisen. Als Beispiel sei hier die Solarthermie genannt, mit Hilfe derer sich im Falle von Flachkollektoren Arbeitstemperaturen von etwa 80°C erzeugen lassen. Verglichen mit der Temperatur von Leitungswasser (etwa 10°C bis 20°C) resultiert daraus eine nutzbare Temperaturdifferenz von ca. 60°C. Es ist deshalb wünschenswert, diese relativ geringen Temperaturunterschiede zu nutzen und mit Hilfe einer entsprechender Vorrichtung zu kinetischer bzw. mechanischer Energie zu machen, die sich unmittelbar vor Ort nutzen ließe oder auch zu elektrischer Energie umzuwandeln, um diese anschließend speichern zu können.

Aus der Heizungstechnik oder auch dem Automobilbau sind Dehnstoffelemente bekannt, die im Wesentlichen einen in einem Gehäuse angeordneten Dehnstoff aufweisen, der seinerseits geeignet ist, durch temperaturabhängige Volumenänderung auf eine Stirnseite eines verschiebbaren Kolbens, beispielsweise als Stellantrieb, zu wirken. In der Heizungstechnik wird ein derartiges Dehnstoffelement in einem Thermostatventil für herkömmliche Heizkörper eingesetzt. Solche bekannten Dehnstoffelemente werden heute industriell gefertigt und sind daher in hohen Stückzahlen zu vergleichsweise geringen Stückkosten verfügbar.

Eine Eigenschaft der oben beschriebenen Dehnstoffelemente ist, dass sie auf geringe Temperaturdifferenzen reagieren, und zwar im Wesentlichen proportional und reversibel, d.h. bei einer Temperaturerhöhung um einen bestimmten Wert bewegt sich der verschiebbare Kolben um eine bestimmte Strecke und bei Reduzierung der Umgebungstemperatur des Dehnstoffelementes um denselben Temperaturdifferenzbetrag bewegt sich der verschiebbare Kolben wieder um denselben Weg in das Dehnstoffelement hinein.

Ein Aktor und eine entsprechende Wärmekraftmaschine, die die oben erwähnten Dehnstoffelemente nutzen, um geringe Temperaturdifferenzen von Fluiden nutzbar zu machen und in mechanische oder elektrische Energie umzuwandeln sind bisher nicht bekannt.

Es ist deshalb die Aufgabe der vorliegenden Erfindung, einen Aktor und eine Wärmekraftmaschine für niedrige Temperaturdifferenzen bereitzustellen, die die günstigen und industriell gefertigten Dehnstoffelemente verwenden, eine einfache Konstruktion aufweisen, im privaten Bereich, wie im industriellen Bereich verwendet werden können und auf diese Weise eine bisher nicht genutzte Quelle zur Erzeugung von mechanischer Energie verwenden.

Diese Aufgabe wird durch den Gegenstand des Anspruchs 1 gelöst. Vorteilhafte Ausgestaltungen sind in den abhängigen Ansprüchen erläutert.

Erfindungsgemäß umfasst ein Aktor zur Umwandlung von thermischer in kinetische Energie einen Arbeitszylinder mit einem Gehäuse mit einem Einlass und einem Auslass für ein Arbeitsfluid, mit mindestens einem Dehnstoffelement, das eine Umhüllung, einen Dehnstoff und eine Kolbenstange aufweist, wobei das Dehnstoffelement von dem Arbeitsfluid umgeben ist, und mit einem Arbeitskolben, der axial aus dem Arbeitszylinder heraus und in denselben hineinbewegbar ist, eine erste Arbeitsfluidquelle, die dazu eingerichtet ist, Arbeitsfluid einer ersten Temperatur bereit zu stellen, eine zweite Arbeitsfluidquelle, die dazu eingerichtet ist, Arbeitsfluid einer um eine vorbestimmte Temperaturdifferenz niedrigeren zweiten Temperatur bereit zustellen, eine Vorlaufleitung, die an ihrem einen Ende mit der ersten oder der zweiten Arbeitsfluidquelle verbindbar und an ihrem anderen Ende mit dem Arbeitszylinder verbunden ist, eine Rücklaufleitung, die an ihrem einen Ende mit dem Arbeitszylinder und an ihrem anderen Ende mit einer Arbeitsfluidsenke verbunden ist, eine Steuerungseinrichtung, die dazu eingerichtet ist, den Fluidfluss aus der ersten oder der zweiten Arbeitsfluidquelle in den oder aus dem Arbeitszylinder zu steuern, wobei sich durch abwechselndes Zuführen von Arbeitsfluid aus der ersten oder zweiten Arbeitsfluidquelle in den Arbeitszylinder das mindestens eine Dehnstoffelement von dem Arbeitsfluid umgeben wird und dadurch eine Hin- und Herbewegung des Arbeitskolbens bewirkt wird.

Bevorzugterweise ist der Dehnstoff ein temperatursensitives Wachs, ein temperatursensitives Gas oder eine temperatursensitive Flüssigkeit. Derartige Dehnstoffelemente sind einfach verfügbar, kostengünstig, langlebig und zuverlässig. Flüssigkeiten haben den Vorteil, dass sie bei Verdichtung einen definierten Anhaltepunkt des Dehnstoffelelements bewirken.

Mit besonderem Vorteil weist ein Arbeitszylinder zwei oder mehr Dehnstoffelemente auf, die als Proportionaldehnstoffelemente ausgebildet und in Reihe geschaltet sind. Damit lässt sich der Hub eines Arbeitszylinders entsprechend vergrößern, ohne erhöhten zusätzlichen Mehraufwand, da nur die Größe des Arbeitszylinders verändert werden muss. Das Arbeitsfluid umströmt dann nicht nur ein, sondern die Mehrzahl von in Reihe geschalteten Dehnstoffelementen. Die Verwendung von identischen Proportionaldehnstoffelementen vereinfacht den Aufbau des Arbeitszylinders und die Berechnung des Gesamthubes.

Bevorzugterweise umfasst die Arbeitsfluidsenke die erste Arbeitsfluidquelle und die zweite Arbeitsfluidquelle. So kann ein energetisch günstiger Arbeitsfluidkreislauf entstehen, da "verbrauchtes" Arbeitsfluid wieder in die Quelle der entsprechenden Temperatur zurückgeführt wird und so wiederverwendet werden kann, auch wenn die Temperatur des Arbeitsfluids je nach Verwendung bei Durchfluss durch den Arbeitszylinder etwas abkühlt bzw. erwärmt wird. Mit weiterem Vorteil umfasst die Vorlaufleitung eine erste Leitung und eine zweite Leitung, wobei die erste Leitung mit der ersten Arbeitsfluidquelle und die zweite Leitung mit der zweiten Arbeitsfluidquelle verbunden sind, und die Rücklaufleitung umfasst eine erste Rückleitung und eine zweite Rückleitung, wobei die erste Rückleitung mit der ersten Arbeitsfluidquelle und die zweite Leitung mit der zweiten Arbeitsfluidquelle verbunden sind. Damit ist eine genauere Temperatursteuerung des zufließenden Arbeitsfluids möglich, weil das Arbeitsfluid unterschiedlicher Temperatur nicht durch eine einzige Vorlaufleitung fließt, die sich jeweils zusätzlich erwärmt bzw. abkühlt.

Mit weiterem Vorteil weist das mindestens eine Dehnstoffelement Wärmeübertragungsrippen auf. Die Wärmeübertragungsrippen, die beispielsweise auf der Außenseite des Dehnstoffelements angeordnet sind, in das Innere des Arbeitszylinders tragen und fest mit dem Dehnstoffelement verbunden sind, sorgen für eine größere Fläche für die Wärmeübertragung von dem Arbeitsfluid, dass durch den Arbeitszylinder fließt, auf das Dehnstoffelement. Schnellere Erwärm- und Abkühlzeiten werden dadurch ermöglicht, was zu einer kürzeren Reaktionszeit des Dehnstoffelements führt. Alternative können die Wärmeübertragungsrippen auch in das Dehnstoffelement hinein ragen, um so die Übertragungsfläche noch weiter zu vergrößern.

Weiterhin erfindungsgemäß ist eine Wärmekraftmaschine mit einer Mehrzahl von ordnungsgemäßen Aktoren, wobei die Aktoren derart gruppiert angeordnet sind und mit Arbeitsfluid aus der ersten und/oder der zweiten Arbeitsfluidquelle gespeist werden, dass eine vorbestimmte Abfolge der Hin- und Herbewegung der Arbeitskolben der Aktoren einstellbar ist.

Mit weiterem Vorteil ist die Wärmekraftmaschine eine Zuführungssteuereinrichtung auf, die Eingangsseitig mit der ersten und der zweiten Arbeitsfluidquelle und Ausgangsseitig mit der Mehrzahl von Aktoren verbunden ist auf. Mit einer derartigen Anordnung ist es beispielsweise möglich, mehrere Aktoren wie Zylinder eines Verbrennungsmotors anzuordnen (in Reihe, in V-Form, als Boxer-Anordnung) und damit die Hin- und Herbewegung der einzelnen Arbeitskolben so einzustellen, dass ein hohes Drehmoment an einer einzelnen Abtriebswelle abgenommen werden kann. Dem einschlägigen Fachmann auf dem Gebiet von Antriebsmaschinen wird einleuchtend, dass er dazu beispielsweise die Arbeitskolben als Pleuelstangen (teilweise) ausbilden kann.

In bevorzugterweise weist die erfindungsgemäße Wärmekraftmaschine eine Zuführungssteuereinrichtung auf, die Eingangsseitig mit der ersten und der zweiten Arbeitsfluidquelle und Ausgangsseitig mit der Mehrzahl von Aktoren verbunden ist. Mittels dieser Zuführungssteuereinrichtung ist gewährleistet, dass das in die verschiedenen Arbeitszylinder zum Richtigen Zeitpunkt ein Arbeitsfluid mit der entsprechenden höheren oder niedrigeren Temperatur eingeleitet wird und somit der Bewegungsverlauf der Arbeitskolben der Aktoren genau einstellbar ist.

Bevorzugterweise ist die Zuführungssteuerungseinrichtung ausgebildet. Damit kann auf aufwendige und teuere zusätzliche Komponenten verzichtet werden oder auch auf eine aufwendige elektronische Steuerung.

Alternativ kann die Zuführungssteuerungseinrichtung eine elektronische Steuereinheit aufweisen, wodurch die Genauigkeit der Zuführung erhöht werden kann und eine genaue Beobachtung von Steuerungsparametern ermöglicht wird.

Mit weiterem Vorteil ist die erfindungsgemäße Wärmekraftmaschine nach dem Prinzip einer Taumelscheibe ausgebildet. Dabei sind mehrere Aktoren gleichmäßig auf einer Kreisbahn angeordnet, und die Arbeitskolben führen ihre Hin- und Herbewegung derart aus, dass sich eine auf einer Welle befestigte Taumel-Scheibe/Schrägscheibe kontinuierlich dreht.

Mit besonderem Vorteil ist die erfindungsgemäße Wärmekraftmaschine nach dem Prinzip einer Axialkolbenmaschine ausgebildet und weist folgende Elemente auf: einen Rahmen mit einer Grundplatte und einem oberen Halteelement, eine Hauptwelle, die drehbar senkrecht zwischen der Grundplatte und dem oberen Halteelement angeordnet ist, eine Halteplatte, die zwischen Grundplatte und oberem Halteelement drehfest mit der Hauptwelle verbunden ist, sechs Aktoren, die auf der Halteplatte radial in gleichmäßigem Abstand angeordnet sind, wobei die Arbeitskolben der Aktoren jeweils parallel zueinander verlaufen, ein Kuppelelement, das drehfest auf der Hauptwelle angeordnet ist und an dem radial im selben gleichmäßigem Abstand der Aktoren Kuppelstangen angeordnet sind, wobei die Kuppelstangen an ihrem einen Ende in einer Ebene senkrecht zur Ebene der Hauptwelle gelagert sind, wobei die Kuppelstangen an ihrem anderen Ende axial gelagerte Rollelemente aufweisen, und wobei die Arbeitskolben der Aktoren an den Kuppelstangen angelenkt sind, um eine Kraft in Axialrichtung der Arbeitskolben aufzubringen, ein Kreisbahnelement, das Ortsfest auf der Grundplatte radial in einem Abstand um die Hauptwelle herum angeordnet ist, der im Wesentlichen dem Abstand zwischen der Hauptwelle und den Rollelementen entspricht, und das jeweils zwei Hochpunkte und zwei Tiefpunkte aufweist, die jeweils abwechselnd in einem Abstand von 90° zueinander angeordnet sind, wodurch auf dem Kreisbahnelement jeweils zwei gegenüberliegende Aufwärts- und Abwärtsabschnitte ausgebildet sind, wobei durch Zuführung von Arbeitsfluid aus der ersten Arbeitsfluidquelle mittels der Zuführungssteuerungseinrichtung die Arbeitskolben der Aktoren, deren zugeordnete Rollelemente sich auf einem der Abschnitte befinden, nach unten bewegt werden, und durch Zuführung von Arbeitsfluid aus der zweiten Arbeitsfluidquelle mittels der Zuführungssteuerungseinrichtung die Arbeitskolben der Aktoren, deren zugeordnete Rollelemente sich auf einem der Aufwärtsabschnitte befinden, nach oben bewegt werden, derart, dass eine Drehbewegung der Hauptwelle bewirkt wird. Mit dieser Anordnung der Aktoren und der entsprechenden Zuführung von Arbeitsfluid aus der ersten bzw. zweiten Arbeitsfluidquelle ist sichergestellt, dass die Hauptwelle eine kontinuierliche Drehbewegung ausführt, weil zu jedem Zeitpunkt sich ein Aktor mit seinem Arbeitskolben und Rollelement auf dem Abwärtsabschnitt des Kreisbahnelements befindet und so für die Fortschreitung der Drehbewegung sorgt. Gleichzeitig üben diejenigen Aktoren, deren Arbeitskolben mit Rollelementen sich auf den Aufwärtsabschnitten des Kreisbahnelements befinden, keine Kraft nach unten auf die Kreisbahn aus, weil durch die Zuführung von Arbeitsfluid niedriger Temperatur in diese Aktoren eine Einziehbewegung des Arbeitskolbens durchgeführt wird.

Vorteilhafterweise liegen die Tiefpunkte des Kreisbahnelements auf der Grundplatte.

Mit weiterem Vorteil beträgt die Temperaturdifferenz zwischen dem Arbeitsfluid in der ersten Arbeitsfluidquelle und dem Arbeitsfluid in der zweiten Arbeitsfluidquelle zwischen 5°C und 60°C, die niedrigste Temperatur des Arbeitsfluids beträgt ca. -15°C und die höchste Temperatur des Arbeitsfluids beträgt ca. 90°C. Damit kann die erfindungsgemäße Wärmekraftmaschine in den meisten Umgebungen im privaten und industriellen Bereich eingesetzt werden. Um die Drehzahl der erfindungsgemäßen Wärmekraftmaschine zu variieren, kann die Temperaturdifferenz verändert werden, alternativ ist es möglich, auch andere Dehnstoffelemente zu verwenden, die eine höhere oder niedrigere Reaktionszeit bei der Kolbenbewegung aufweisen.

Bevorzugt weist die Zuführungssteuerungseinrichtung der Wärmekraftmaschine eine am Rahmen befestigten inneren Ring und einen sich um den inneren Ring herum drehenden äußeren Ring auf, wobei der innere Ring auf seiner Oberseite einen mit der ersten Arbeitsfluidquelle verbundenen ersten Einlass, einen mit der zweiten Arbeitsfluidquelle verbundenen zweiten Einlass, einen mit der ersten Arbeitsfluidquelle verbundenen ersten Auslass und einen mit der zweiten Arbeitsfluidquelle verbundenen zweiten Auslass aufweist, wobei der äußere Ring auf einer Vorlaufebene und einer dazu parallelen Rücklaufebene jeweils sechs in Umfangsrichtung gleichmäßig beabstandete radial verlaufende Durchführungen aufweist, wobei die Durchführungen der Vorlaufebene auf der Außenseite des äußeren Rings mit den Vorlaufleitungen zu und die Durchführungen der Rücklaufebene mit den Rücklaufleitungen von den Arbeitszylindern verbunden sind, und im Inneren des inneren Rings auf der Vorlaufebene zwei sich kreuzende, nicht verbundene Vorlaufkammern, deren Öffnungen sich jeweils diagonal gegenüber liegen und auf der Rücklaufebene zwei sich kreuzende, nicht verbundene Rücklaufkammern ausgebildet sind, deren Öffnungen sich jeweils diagonal gegenüber und unter den Öffnungen der Vorlaufkammern liegen. Weiterhin sind bevorzugt die Öffnungen der Vorlaufkammern und der Rücklaufkammern derart ausgebildet, dass bei einer Drehung des äußeren Rings mit Bezug auf den inneren Ring auf der Vorlaufebene zu jedem Zeitpunkt Arbeitsfluid von dem ersten oder zweiten Einlass über die Öffnungen der Vorlaufkammern in zwei gegenüberliegende Durchführungen des äußeren Rings und auf der Rücklaufebene zu jedem Zeitpunkt Arbeitsfluid von zwei gegenüberliegenden Durchführungen des äußeren Rings in die Öffnungen der Rücklaufkammern und weiter aus dem ersten oder zweiten Auslass strömen kann. Mit dieser rein mechanischen Zuführungseinrichtung wird eine kontinuierliche Drehbewegung der Hauptwelle ermöglicht. Vorraussetzung ist lediglich, dass aus der ersten bzw. zweiten Arbeitsfluidquelle das Arbeitsfluid mit den entsprechenden Temperaturen unter gleich bleibenden Temperaturen unter gleich bleibenden Druck bereitgestellt wird. Ein Druck von 50 kPa (0,5 bar) für Wasser als Fluid ist hierzu ausreichend. Es sind auch andere Druckwerte für Fluide möglich, ein möglicher Bereich umfasst ca. 20 kPa (0,2 bar) bis ca. 400 kPa (4 bar), wobei bei höheren Druckwerten die Leitungen, Ventile etc. entsprechend ausgelegt sein müssen.

Die Erfindung wird nachfolgend unter Bezugnahme auf das in den Zeichnungen dargestellte Ausführungsbeispiel näher beschrieben. Es zeigen:
Fig. 1 eine Querschnittseitenansicht eines Arbeitszylinders gemäß einer Ausführungsform des erfindungsgemäßen Aktors;
Fig. 2 im Querschnitt eine Draufsicht eines Arbeitszylinders einer weiteren Ausführungsform des erfindungsgemäßen Aktors;
Fig. 3 eine Vorderansicht eines bevorzugten Ausführungsbeispiels der erfindungsgemäßen Wärmekraftmaschine;
Fig. 4 eine Querschnittansicht der Draufsicht des unteren Teils der Wärmekraftmaschine aus Fig. 3;
Fig. 5 eine Draufsicht einer Zuführungssteuereinrichtung der Wärmekraftmaschine aus Fig. 3; und
Fig. 6 eine Seitenansicht im Schnitt der Zuführungssteuereinrichtung aus Fig. 5.

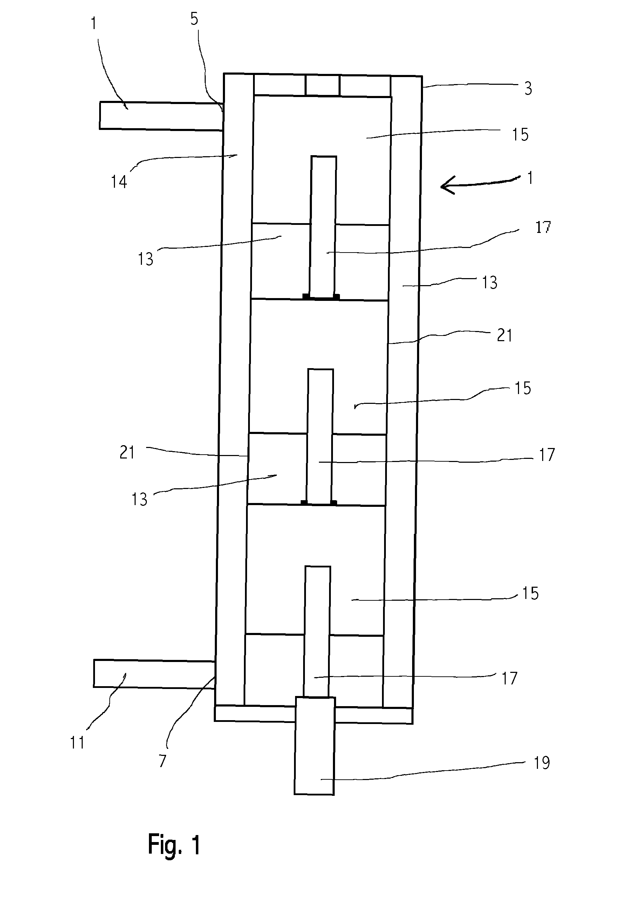

Fig. 1 zeigt eine Querschnittsdarstellung des Arbeitszylinders eines bevorzugten Ausführungsbeispiels des erfindungsgemäßen Aktors. Der Arbeitszylinder 1 umfasst ein Gehäuse 3, das oben einen Einlass 5 und unten einen Auslass 7 aufweist. An dem Einlass 5 ist fluiddicht eine Vorlaufleitung 9 angebracht, und in gleicher Weise weist der Auslass 7 fluiddicht eine Rücklaufleitung 11 auf. Im Innenraum 13 des Gehäuses 3 sind übereinander bzw. in Reihe geschaltet drei Dehnstoffelemente 15 angeordnet, die jeweils nach unten gerichtet eine Kolbenstange 17 aufweisen. Die Dehnstoffelemente 15 sind beispielsweise von dem Typ, wie er bei herkömmlichen Thermostatventilen im Heizungsbau verwendet wird. Es befindet sich im Inneren ein Wachs/Gas oder eine Flüssigkeit, das bzw. die sich bei Erwärmung ausdehnt, wodurch sich die Kolbenstange axial aus dem Dehnstoffelement herausbewegt, und bei entsprechender Temperaturabnahme des das Dehnstoffelement umgebenden Arbeitsfluids bewegt sich die Kolbenstange wieder in das Dehnstoffelement hinein. Besonders vorteilhaft für die vorliegende Erfindung ist es, wenn der Dehnstoff die Eigenschaft aufweist, dass er nicht oder kaum von einer äußeren Kraft komprimiert werden kann, sondern lediglich die Eigenschaft der Wärmeausdehnung bzw. -kompression bei Temperaturabnahme aufweist.

Im vorliegenden Ausführungsbeispiel ist das oberste Dehnstoffelement 15 fest an dem Gehäuse 3 fixiert. alternativ kann diese Fixierung weggelassen werden. In gleicher Weise ist die Kolbenstange 17 des obersten Dehnstoffelements 15 mit der Oberseite des mittleren Dehnstoffelements 15 verbunden. Auch diese feste Verbindung kann weggelassen werden. In gleicher Weise ist die Kolbenstange 17 des mittleren Dehnstoffelements 15 mit der Oberseite des unteren Dehnstoffelements 15 verbunden. Die Kolbenstange 17 des unteren Dehnstoffelements 15 ist axial fest mit dem Arbeitskolben 19 verbunden, der fluiddicht aus der Unterseite des Gehäuses 3 herausragt und darin axial leichtgängig verschieblich angeordnet ist. Für die Führung des Arbeitskolbens 19 ist zu beachten, dass sie hohen Axialkräften standhalten kann, sodass eine Heraus- und Hineinbewegung des Arbeitskolbens 19 aus dem bzw. in das Gehäuse 3 gewährleistet ist. Es muss sicher gestellt sein, das bei nicht vollständig axialer Kraftausübung des Arbeitskolbens auf einen Punkt oder eine Fläche die Führung des Arbeitskolbens 19 im Gehäuse 3 nicht verklemmt.

Nachfolgend wird die Funktionsweise des Arbeitszylinders 1 als Teil des erfindungsgemäßen Aktors erläutert. Als Arbeitsfluid kommt hier beispielsweise Wasser unterschiedlicher Temperatur zum Einsatz. Es sind auch andere Flüssigkeiten oder Gase als Arbeitsfluid denkbar, z.B. Abwasserflüssigkeiten, Flüssigkeiten, die in der industriellen Produktion als Abfallprodukt anfallen oder auch derartige Gase. Das Arbeitsfluid 14, hier Wasser, das aus der Vorlaufleitung 9 in den Innenraum 13 des Gehäuses 3 zuführbar ist und den Innenraum 13 über die Rücklaufleitung 11 wieder verlassen kann, wird von den (nicht dargestellten) ersten und zweiten Arbeitsfluidquellen bereitgestellt. Jede der beiden Arbeitsfluidquellen stellt ein Arbeitsfluid 14 mit einer unterschiedlichen Temperatur zur Verfügung, wobei die Temperaturdifferenz bevorzugt zwischen 5°C und 60°C liegen kann.

Im Innenraum 13 des Gehäuses 3 umgibt das Arbeitsfluid 14 nahezu vollständig die Dehnstoffelemente 15, die in axialer Bewegungsrichtung der Kolbenstangen 17 bzw. des Arbeitskolbens 19 in einer Führung 21 gehalten werden, die fest mit dem Gehäuse 3 verbunden ist und parallel zur axialen Bewegungsrichtung des Arbeitszylinders angeordnet ist. Im dargestellten Beispiel sind die Dehnstoffelemente 15 zylinderförmig ausgebildet, dadurch ergibt sich auch für die Führung 21 eine zylinderartige Form. Es versteht sich, dass die Führung 21 nicht voll umfänglich zylinderförmig ausgebildet sein muss, sondern derart eingerichtet sein muss, dass eine exakte Führung der Dehnstoffelemente 15 innerhalb des Arbeitszylinders 1 in Axialrichtung gewährleistet ist. Beispielsweise könnte ein Führungsrahmen für die Dehnstoffelemente ausgebildet sein, so dass das davon verbrauchte Volumen minimiert wird, um das Wärmeübertragungsvolumen zu maximieren.

Die in Fig. 1 dargestellte Ausführungsform weist die Vorlaufleitung 9 oben und die Rücklaufleitung 11 unten auf. Es ist jedoch ebenfalls möglich, die Vorlaufleitung 9 unten und die Rücklaufleitung 11 oben anzusetzen; entscheidend ist, dass zwischen dem Einströmen des Arbeitsfluids 14 durch die Vorlaufleitung 9 und dem Herausströmen aus der Rücklaufleitung 11 das Arbeitsfluid 14 möglichst vollständig alle Dehnstoffelemente 15 umgibt, um für eine optimale Wärmeübertragung von dem Arbeitsfluid 14 auf die Dehnstoffelemente 15 zu sorgen.

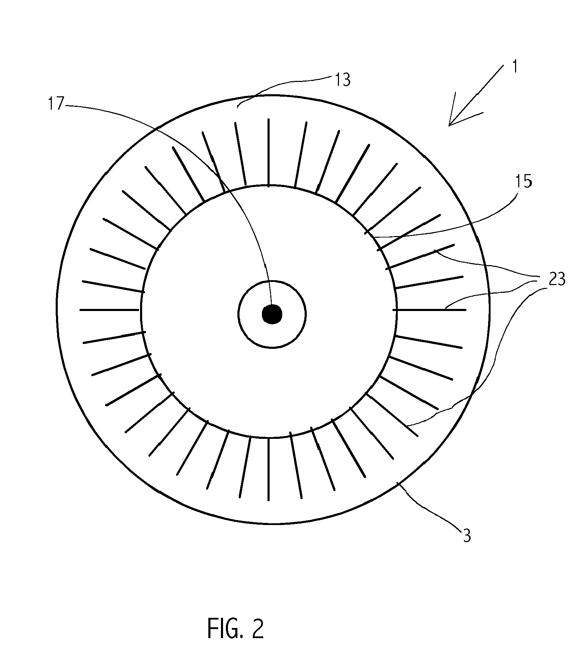

In Fig. 2 ist in Draufsicht ein Querschnitt durch einen Arbeitszylinder 1 einer weiteren Ausführungsform des erfindungsgemäßen Aktors dargestellt. Dabei weist das Dehnstoffelement 15 in Radialrichtung nach außen, d. h. in den Innenraum 13 des Arbeitszylinders 1 hinein, Wärmeübertragungsrippen 23 auf, die dazu dienen, die Temperaturübertragung zwischen dem Arbeitsfluid 14, das sich im Innenraum 13 befindet, und dem Dehnstoffelement 15 zu erhöhen. Die Wärmeübertragungsrippen 23 sind in dem dargestellten Beispiel fest auf der zylinderförmigen Außenfläche des Dehnstoffelementes 15 angeordnet, beispielsweise mit der Außenfläche verschweißt. Es ist darüber hinaus ebenfalls möglich, dass die Wärmeübertragungsrippen durch die Wand des Dehnstoffelementes hindurch in den Innenraum des Dehnstoffelementes 15 verlängert sind, um nochmals die Temperaturübertragung von dem Arbeitsfluid 14 auf den Dehnstoff im Inneren des Dehnstoffelementes 15 zu verbessern. Selbstverständlich sind auch andere Maßnahmen denkbar, die denselben physikalischen Effekt hervorrufen, nämlich dass im Innenraum 13 des Arbeitszylinders 1 eine größere Fläche an Material bereitsteht, das geeignet ist, Wärme wirksam auf den Dehnstoff innerhalb des Dehnstoffelementes 15 zu übertragen.

Der Vollständigkeit halber sei an dieser Stelle erwähnt, dass die in Fig. 1 dargestellten Vorlaufleitungen bzw. Rücklaufleitungen in Fig. 2 nicht dargestellt sind.

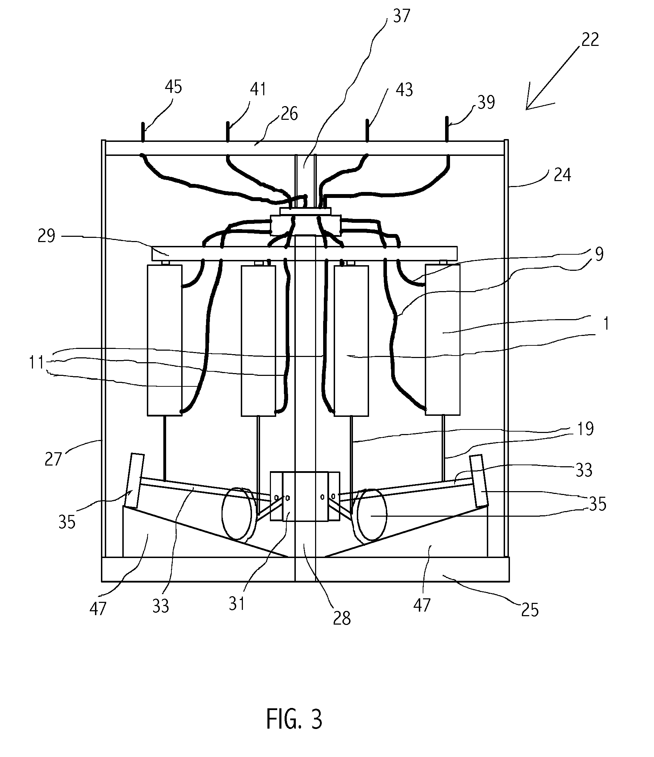

Fig. 3 zeigt in Seitenansicht ein Ausführungsbeispiel einer erfindungsgemäßen Wärmekraftmaschine 22, die nach Art einer Axialkolbenmaschine arbeitet. Die Wärmekraftmaschine 22 umfasst einen Rahmen 24 mit einer Grundplatte 25 und einem oberen Halteelement 26, die zusammen mit Seitenstreben 27 einen im Wesentlichen rechteckigen Rahmen 24 bilden. Eine Hauptwelle 28 ist drehbar zwischen der Grundplatte 25 und dem oberen Halteelement 26 angeordnet. Eine im Wesentlichen kreisförmige Halteplatte 29 ist zwischen der Grundplatte 25 und dem oberen Halteelement 26 drehfest mit der Hauptwelle 28 verbunden. An der Halteplatte 29 sind in gleichmäßigem Abstand in der Nähe des Umfangs der Halteplatte 29 mit identischem radialen Abstand sechs Arbeitszylinder 1 in Richtung der Grundplatte 25 angeordnet, deren Arbeitskolben 19 jeweils parallel zueinander, im Wesentlichen senkrecht zur Grundplatte 25 verlaufen.

Oberhalb der Grundplatte 25 ist auf der Hauptwelle 28 drehfest ein Koppelelement 31 angeordnet, an dem wiederum an sechs radial nach außen verlaufenden Haltelaschen jeweils Kuppelstangen 33 angelenkt sind, die radial nach außen verlaufen und in der Schwenkebene um einen bestimmten Winkel (beispielsweise um 90°) verschwenkbar sind. An ihrem nicht angelenktem Ende weisen die Kuppelstangen 33 jeweils ein Rollelement 35 auf, das in der Art eines Laufrades an der Kuppelstange 33 drehbar befestigt ist. In dem Bereich zwischen Koppelelement 31 und Rollelement 35 ist jede Kuppelstange, vorzugsweise nahe an dem Rollelement 35 aufgrund der Hebelanordnung, jeweils ein Arbeitskolben 19 der sechs Arbeitszylinder 1 angelenkt.

Zwischen oberem Halteelement 26 und der Halteplatte 29 ist an der Hauptwelle 28 eine Zuführungssteuereinrichtung 37 angeordnet, deren Aufbau und Funktion weiter unten näher erläutert ist. Jeder Arbeitszylinder 1 weist an seinem Einlass 5 bzw. Auslass 7 eine Vorlaufleitung 9 und eine entsprechende Rücklaufleitung 11 auf, die an ihrem anderen Ende jeweils mit der Zuführungssteuereinrichtung 37 verbunden sind. Die Vorlaufleitungen 9 und Rücklaufleitungen 11 sind dabei durch die Halteplatte 29 geführt. Wie bereits oben erwähnt, können die Vorlaufleitungen 9 und Rücklaufleitungen 11 entweder oben oder unten an den Arbeitszylindern 1 Einlässe 5 bzw. Auslässe 7 angeordnet sein. Die Vor- und Rücklaufleitungen 9, 11 können auch mit mehreren Anschlüssen, die radial an der oberen bzw. unteren Zylinderhälfte der Arbeitszylinder angebracht sind, verbunden werden, was einen schnelleren Arbeitsfluidaustausch gewährleistet.

Von der Zuführungssteuereinrichtung 37 verlaufen eine erste gemeinsame Vorlaufleitung 39 sowie eine erste gemeinsame Rücklaufleitung 43 einer (nicht dargestellten) ersten Arbeitsfluidquelle, und eine zweite gemeinsame Vorlaufleitung 41 sowie eine zweite gemeinsame Rücklaufleitung 45 verlaufen von der Zuführungssteuereinrichtung 37 zu einer (nicht dargestellten) zweiten Arbeitsfluidquelle.

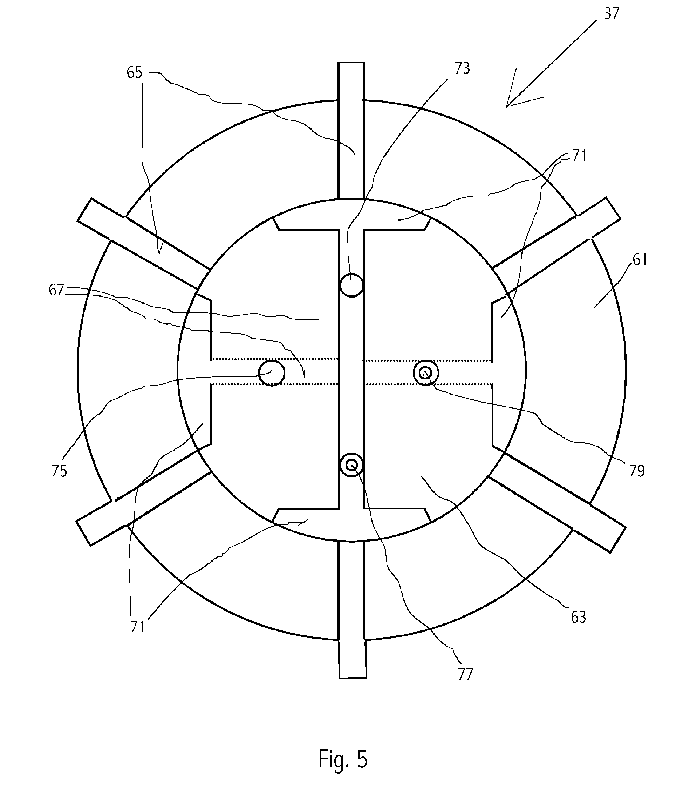

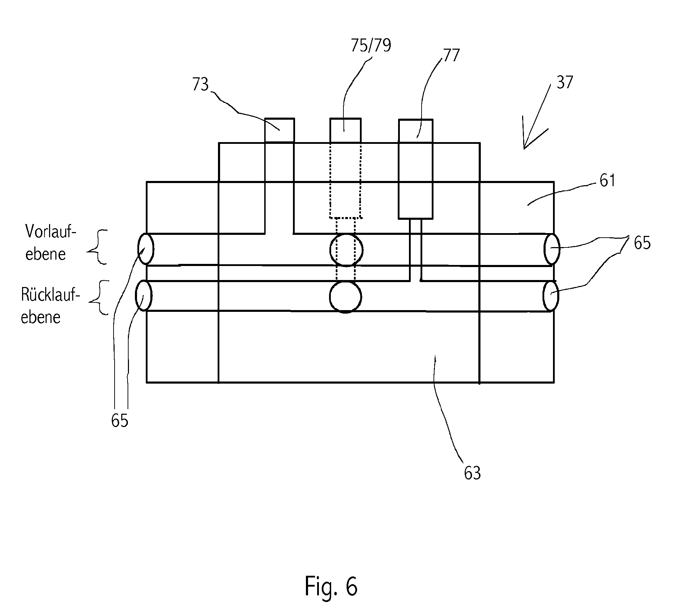

Wie die Zuführungssteuereinrichtung 37 den Zufluss bzw. Abfluss in die Arbeitszylinder 1 bzw. aus demselben Steuert, wird weiter unten mit Bezug auf die Fig. 5 und 6 beschrieben.

Die Wärmekraftmaschine 22 weist eine Grundplatte 25, ein Kreisbahnelement 47 auf, das ortsfest auf der Grundplatte 25 radial in einem Abstand um die Hauptwelle 28 herum angeordnet ist. Der Abstand zwischen der Hauptwelle 28 und dem Kreisbahnelement 47 entspricht im Wesentlichen dem Abstand zwischen der Hauptwelle 28 und den Rollelementen 35 am Ende der Kuppelstangen 33.

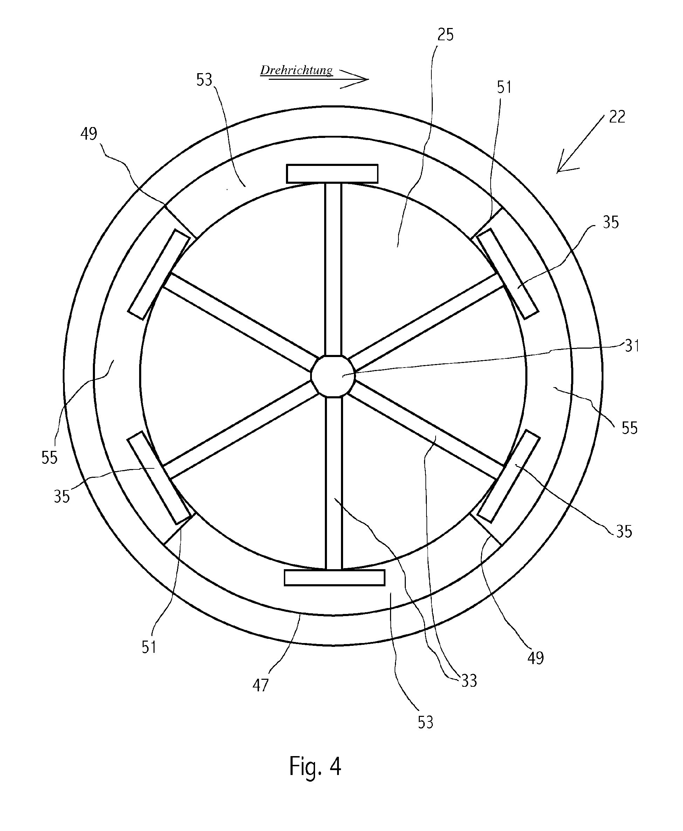

Das Kreisbahnelement 47 wird im Folgenden unter Bezugnahme auf Fig. 4 detailliert beschrieben. Das Kreisbahnelement 47 weist in dem hier dargestellten Ausführungsbeispiel jeweils zwei diagonal gegenüberliegende Hochpunkte 49 und Tiefpunkte 51 auf, wobei den Tiefpunkten 51 um 90° versetzt jeweils ein Hochpunkt 49 angeordnet ist. Im dargestellten Ausführungsbeispiel liegen die beiden Tiefpunkte 51 auf der Grundplatte 25.

Anhand der Fig. 3 und 4 wird nun die Funktionsweise der erfindungsgemäßen Wärmekraftmaschine mit den erfindungsgemäßen Aktoren ausführlich beschrieben. Durch das Zuführen von wärmerem Arbeitsfluid 14 aus der (nicht dargestellt) ersten Arbeitsfluidquelle mittels der Zuführungssteuereinrichtung 37 in die Arbeitszylinder 1 wird bewirkt, dass Arbeitfluid 14 die in den Arbeitszylindern 1 enthaltenen Dehnstoffelemente 15 umströmt und sich dadurch im Zuge der Herausbewegung der Kolbenstangen 17 des Dehnstoffelementes 15 der Arbeitskolben 19 jedes Arbeitszylinders 1 nach unten bewegt. Da jeder Arbeitskolben 19 an einer Kuppelstange 33 angelenkt ist, und zwar im Wesentlichen in einem Winkel von etwa 90°, wird eine Kraft in Axialrichtung des Arbeitskolbens 19 von dem am Ende der Kuppelstange 33 befestigten Rollelement 35 auf Kreisbahnelement 47 ausgeübt. Die Ansteuerung durch die Zuführungssteuereinrichtung 37 erfolgt derart, dass ein Herausbewegen des Arbeitskolbens 19 aus dem Arbeitszylinder 1 nur dann erfolgt, wenn sich das entsprechende Rollelement 35 zwischen dem Hochpunkt 49 und dem Tiefpunkt 51 auf dem Abwärtsabschnitt 53 des Kreisbahnelements 47 befindet. Durch die Schräge des Abwärtsabschnitts 53 (die je nach Höhe des Hochpunkts 49 über der Grundplatte 25 eingestellt werden kann) entsteht eine Kraft in Umfangsrichtung des Kreisbahnelements 47 derart, dass sich die Kuppelstange 30 mit dem Rollelement 35 auf dem Abwärtsabschnitt 53 nach unten bewegt und damit die Hauptwelle 28, die über das Kuppelelement 31 mit den Kuppelstangen 33 verbunden ist, mitbewegt.

Sobald das Rollelement 35 des betreffenden Arbeitszylinders 1 den Tiefpunkt 51 erreicht hat und damit den Abwärtsabschnitt 53 verlassen hat, wird die Zufuhr von Arbeitsfluid 14 aus der ersten Arbeitsfluidquelle angehalten, und stattdessen wird Arbeitsfluid aus der zweiten Arbeitsfluidquelle, die das Arbeitsfluid der geringeren Temperatur enthält, in den Arbeitszylinder 1 geführt. Dadurch zieht sich der Arbeitskolben 19 des Arbeitszylinders 1 wieder ein, weil die reversiblen Dehnstoffelemente ein Einfahren der Kolbenstangen und damit des Arbeitskolbens 19 bewirken. Die Zuführung von kälterem Arbeitsfluid in den Arbeitszylinder 1 wird solange durchgeführt, bis das Rollelement 35 den Aufwärtsabschnitt 55 auf dem Kreisbahnelement 47 verlassen und den nächsten, in Drehrichtung liegenden Hochpunkt 49 erreicht hat. Dann wird die Zufuhr von kälterem Arbeitsfluid aus der zweiten Arbeitsfluidquelle durch die Zuführungssteuereinrichtung 37 wieder angehalten und es wird Arbeitsfluid aus der ersten, wärmeren Arbeitsfluidquelle in den Arbeitszylinder 1 geführt, sodass sich innerhalb der Dehnstoffelemente 15 wieder ausdehnen und zu einem Herausfahren des Arbeitskolbens 19 aus dem Arbeitszylinder 1 führen.

Durch die Anordnung von sechs Arbeitszylindern 1 auf dem Kreisbahnelement 47 mit seinen jeweils zwei Hochpunkten 49 und Tiefpunkten 51 ist durch geeignete Steuerung der Zuführungssteuereinrichtung 37 sichergestellt, dass sich zu jedem Zeitpunkt drei Rollelemente 35 und damit zwei Arbeitszylinder 1 mit ihren Arbeitskolben 19 auf den Abwärtsabschnitten 53 befinden und eine Kraft auf den Abwärtsabschnitt 53 ausüben derart, dass ein Vortrieb in Drehrichtung bewirkt wird. Damit wird deutlich, dass zu bestimmten Zeitpunkten sich auch vier Rollelemente 35, d. h. zwei auf jedem Abwärtsabschnitt 53 befinden können.

Dadurch, dass auf den Aufwärtsabschnitten 55 zu keinem Zeitpunkt auf die dort befindlichen Rollelemente 35 bzw. deren Arbeitskolben 19 eine Kraft nach unten ausgeübt wird, wird verhindert, dass die Drehbewegung der gesamten Wärmekraftmaschine in entgegen gesetzter Richtung verlangsamt oder gar angehalten wird.

Im Folgenden wird unter Bezugnahme auf die Fig. 5 und 6 die Funktion der Zuführungssteuereinrichtung 37 näher erläutert. Fig. 5 zeigt die Zuführungssteuereinrichtung 37 in Draufsicht, wobei zum Besseren Verständnis nur die Vorlaufebene dargestellt ist und Elemente wie die Vor- bzw. Rücklaufleitungen die Hauptwelle 28 weggelassen sind. Die Zuführungssteuereinrichtung 37 umfasst einen äußeren Ring 61, der um einen inneren Ring 63 drehbar gelagert angeordnet ist, wobei der innere Ring 63 fest am Rahmen 24 der Wärmekraftmaschine 22 befestigt ist. Der äußere Ring 61 weist auf der Vorlaufebene und auf der Rücklaufebene jeweils sechs in Umfangsrichtung gleichmäßig beabstandete radial verlaufende Durchführungen 65 auf, wobei die Durchführungen der Vorlaufebene auf der Außenseite des äußeren Rings 61 mit den Vorlaufleitungen zu und die Durchführungen 65 der Rücklaufebene mit den Rücklaufleitungen von den Arbeitszylindern 1 verbunden sind (nicht dargestellt). Der innere Ring 63 weist auf seiner Oberseite einen mit der ersten Arbeitsfluidquelle (nicht dargestellt) verbindbaren Einlass 73, einen mit der zweiten Arbeitsfluidquelle (nicht dargestellt) verbindbaren zweiten Einlass 75, einen mit der ersten Arbeitsfluidquelle verbindbaren ersten Auslass 77 und einen mit der zweiten Arbeitsfluidquelle verbindbaren zweiten Auslass 79 auf. Im Inneren des inneren Rings 63 sind auf der Vorlaufebene zwei sich kreuzende, nicht verbundene Vorlaufkammern 67 angeordnet, die jeweils sich gegenüberliegende Öffnungen 71 aufweisen, durch die bei Zuführung von Arbeitsfluid das Arbeitsfluid über die Durchführungen 65 aus- bzw. zurückfließen kann. Es ist anzumerken, dass wie erwähnt in Fig. 5 lediglich die Vorlaufebene sichtbar ist.

Es ist anzumerken, im Hinblick auf Fig. 5, dass sich die beiden Vorlaufkammern 67 zwar in der Mitte des inneren Rings 63 kreuzen, allerdings ohne eine direkte Verbindung zueinander aufzubauen, d. h. eine Vermischung von Arbeitsfluid aus den beiden Vorlaufkammern ist in der Zuführungssteuereinrichtung 37 nicht möglich. Dies ist dem Fachmann klar, denn ein vermischen der Arbeitsfluide aus der ersten und zweiten Arbeitsfluidquelle würde dazu führen, dass die Temperaturdifferenz zwischen den beiden Quellen auf 0 herabsinkt.

In Fig. 6 erkennt man die Rücklaufebene, die unterhalb der Vorlaufebene liegt, von den Durchführungen 65 her allerdings identisch aufgebaut ist. Gleiches gilt für die Rücklaufkammern 69, die exakt unter (oder über) den Vorlaufkammern 67 liegen. Auch für die Rücklaufkammern 69 gilt wie oben, dass sie gegenüberliegende Öffnungen 71 aufweisen, in einem Winkel im Wesentlichen 90° zueinander angeordnet sind, aber es keine direkte Verbindung zwischen ihnen besteht, sodass keine Mischung von Arbeitsfluid der beiden Rücklaufkammern 69 möglich ist. Die Vorlaufkammern 67 sind jeweils mit einem ersten Einlass 73 bzw. einem zweiten Einlass 75, und die Rücklaufkammern 69 jeweils mit einem ersten Auslass 77 und einem zweiten Auslass 79 verbunden.

Die Funktion der Zuführungssteuereinrichtung 37 ist derart, dass bei einer Drehung des äußeren Rings 69 bezogen auf den inneren Ring 63 auf der Vorlaufebene zu jedem Zeitpunkt Arbeitsfluid von dem ersten Einlass 73 oder dem zweiten Einlass 75 über die Öffnungen 71 der Vorlaufkammern 67 in zwei gegenüberliegende Durchführungen 65 des äußeren Rings 61 und auf der Rücklaufebene zu jedem Zeitpunkt Arbeitsfluid von zwei gegenüberliegenden Durchführungen 65 des äußeren Rings 61 in die Öffnungen 71 der Rücklaufkammern 69 und weiter aus dem ersten Auslass 77 oder dem zweiten Auslass 79 strömen kann. Die Öffnungen 71 sind auf beiden Ebenen folglich so dimensioniert, dass immer entweder Arbeitsfluid aus der ersten Arbeitsfluidquelle oder über dann die andere Vorlaufkammer Arbeitsfluid aus der zweiten Arbeitsfluidquelle durch andere Durchführungen 65 hin zu den entsprechenden Arbeitszylindern strömen kann, je nach Drehstellung des beweglichen äußeren Rings 61 bezüglich des im Rahmen 24 fest angeordneten inneren Rings 63.

Es ist auch möglich, anstatt der hier dargestellten mechanischen Steuereinrichtung 37 eine anders geartete, z. B. eine elektronisch funktionierende Zuführungssteuereinrichtung einzusetzen, die ebenfalls bewirkt, dass die Arbeitsfluide unterschiedlicher Temperatur zeitrichtig und synchronisiert in die entsprechenden Arbeitszylinder einströmen können.

Eine weitere Einsatzmöglichkeit des erfindungsgemäßen Aktors bzw. der erfindungsgemäßen Wärmekraftmaschine ist, die Temperaturdifferenz zu nutzen, die beim Einsatz von Wärmepumpen entsteht. Diese Geräte entziehen dem Wärmeträger, z.B. ein durch Grundwasser erwärmtes Kältemittel mit einer Temperatur von 8°C, die Wärmeenergie und geben es in dem Beispiel mit bis zu -25°C wieder ab. Da diese Temperatur meist um über 20 Grad niedriger ist als die normale Luft- oder Grundwassertemperatur, kann mit der erfindungsgemäßen Wärmekraftmaschine ein Teil der Antriebsenergie für die Wärmepumpe gewonnen werden.

Mit dem erfindungsgemäßen Gegenstand werden ein Aktor und eine Wärmekraftmaschine für niedrige Temperaturdifferenzen bereitgestellt, die die günstigen und industriell gefertigten Dehnstoffelemente verwenden, eine einfache Konstruktion aufweisen, im privaten Bereich wie im industriellen Bereich verwendet werden können und auf diese Weise eine bisher nicht genutzte Quelle zur Erzeugung von mechanischer Energie verwenden.

## Patentansprüche

1. Aktor zur Umwandlung von thermischer in kinetische Energie umfassend
einen Arbeitszylinder (1) mit
einem Gehäuse (3) mit einem Einlass (5) und einem Auslass (7) für ein Arbeitsfluid,
mindestens einem Dehnstoffelement (15), das eine Umhüllung, einen Dehnstoff und eine Kolbenstange (17) aufweist, wobei das Dehnstoffelement (15) zumindest teilweise von dem Arbeitsfluid (14) umgeben ist,
und einem Arbeitskolben (19), der axial aus dem Arbeitszylinder (1) heraus und in denselben hinein bewegbar ist,
eine erste Arbeitsfluidquelle, die dazu eingerichtet ist, Arbeitsfluid (14) einer ersten Temperatur bereit zu stellen,
eine zweite Arbeitsfluidquelle, die dazu eingerichtet ist, Arbeitsfluid (14) einer um eine vorbestimmte Temperaturdifferenz niedrigeren zweiten Temperatur bereit zu stellen,
eine Vorlaufleitung (9), die an ihrem einen Ende mit der ersten oder der zweiten Arbeitsfluidquelle verbindbar und an ihrem anderen Ende mit dem Arbeitszylinder (1) verbunden ist,
eine Rücklaufleitung (11), die an ihrem einen Ende mit dem Arbeitszylinder (1) und an ihrem anderen Ende mit einer Arbeitsfluidsenke verbunden ist,
eine Steuerungseinrichtung, die dazu eingerichtet ist, den Fluidfluss aus der ersten oder der zweiten Arbeitsfluidquelle in den und aus dem Arbeitszylinder (1) zu steuern,
wobei sich durch abwechselndes Zuführen von Arbeitsfluid (14) aus der ersten oder der zweiten Arbeitsfluidquelle in den Arbeitszylinder (1) das mindestens eine Dehnstoffelement (15) von dem Arbeitsfluid (14) umgeben wird und **dadurch** eine Hin- und Herbewegung des Arbeitskolbens (19) bewirkt wird.

2. Aktor nach Anspruch 1, **dadurch gekennzeichnet, dass** der Dehnstoff temperatursensitives Wachs, temperatursensitives Gas oder eine temperatursensitive Flüssigkeit ist.

3. Aktor nach Anspruch 1 oder 2, **dadurch gekennzeichnet, dass** ein Arbeitszylinder (1) zwei oder mehr Dehnstoffelemente (15) aufweist, die als Proportionaldehnstoffelemente ausgebildet und in Reihe geschaltet sind.

4. Aktor nach einem der vorhergehenden Ansprüche, **dadurch gekennzeichnet, dass** die Arbeitsfluidsenke die erste Arbeitsfluidquelle und die zweite Arbeitsfluidquelle umfasst, dass die Vorlaufleitung (9) eine erste Leitung und eine zweite Leitung umfasst, wobei die erste Leitung mit der ersten Arbeitsfluidquelle und die zweite Leitung mit der zweiten Arbeitsfluidquelle verbunden sind, und dass die Rücklaufleitung (11) eine erste Rückleitung und eine zweite Rückleitung umfasst, wobei die erste Rückleitung mit der ersten Arbeitsfluidquelle und die zweite Leitung mit der zweiten Arbeitsfluidquelle verbunden sind.

5. Aktor nach einem der vorhergehenden Ansprüche, **dadurch gekennzeichnet, dass** das mindestens eine Dehnstoffelement (15) Wärmeübertragungsrippen (23) aufweist.

6. Wärmekraftmaschine (22) mit einer Mehrzahl von Aktoren nach einem der vorhergehenden Ansprüche, **dadurch gekennzeichnet, dass**
die Aktoren derart gruppiert angeordnet sind und mit Arbeitsfluid (14) aus der ersten und/oder der zweiten Arbeitsfluidquelle gespeist werden, dass eine vorbestimmte Abfolge der Hin- und Herbewegung der Arbeitskolben (19) der Aktoren einstellbar ist.

7. Wärmekraftmaschine (22) nach Anspruch 6, **dadurch gekennzeichnet, dass** sie eine Zuführungssteuereinrichtung (37) aufweist, die eingangsseitig mit der ersten und der zweiten Arbeitsfluidquelle und ausgangsseitig mit der Mehrzahl von Aktoren verbunden ist.

8. Wärmekraftmaschine (22) nach Anspruch 7, **dadurch gekennzeichnet, dass** die Zuführungssteuereinrichtung (37) mechanisch ausgebildet ist.

9. Wärmekraftmaschine (22) nach Anspruch 7, **dadurch gekennzeichnet, dass** die Zuführungssteuereinrichtung (37) eine elektronische Steuereinheit aufweist ist.

10. Wärmekraftmaschine (22) nach einem der Ansprüche 6 bis 9, **dadurch gekennzeichnet, dass** sie nach dem Prinzip einer Taumelscheibe ausgebildet ist.

11. Wärmekraftmaschine (22) nach einem der Ansprüche 6 bis 9, **dadurch gekennzeichnet, dass** sie nach dem Prinzip einer Axialkolbenmaschine arbeitet und aufweist:
einen Rahmen mit einer Grundplatte (25) und einem oberen Halteelement (26),
eine Hauptwelle (28), die drehbar senkrecht zwischen der Grundplatte (25) und dem oberen Halteelement (26) angeordnet ist,
eine Halteplatte (29), die zwischen Grundplatte (25) und oberem Halteelement (26) drehfest mit der Hauptwelle (28) verbunden ist,
sechs Aktoren, die auf der Halteplatte (29) radial in gleichmäßigem Abstand angeordnet sind, wobei die Arbeitskolben (19) der Aktoren jeweils parallel zueinander verlaufen,
ein Kuppelelement (31), das drehfest auf der Hauptwelle (28) angeordnet ist und an dem radial im selben gleichmäßigem Abstand der Aktoren Kuppelstangen (33) angeordnet sind, wobei die Kuppelstangen (33) an ihrem einen Ende in einer Ebene senkrecht zur Drehebene der Hauptwelle (28) schwenkbar angelenkt sind, wobei die Kuppelstangen (33) an ihrem anderen Ende axial gelagerte Rollelemente (35) aufweisen, und wobei die Arbeitskolben (19) der Aktoren an den Kuppelstangen (33) angelenkt sind, um eine Kraft in Axialrichtung der Arbeitskolben (19) aufzubringen,
ein Kreisbahnelement (47), das ortsfest auf der Grundplatte (25) radial in einem Abstand um die Hauptwelle (28) herum angeordnet ist, der im Wesentlichen dem Abstand zwischen Hauptwelle (28) und Rollelementen (35) entspricht, und das jeweils zwei Hochpunkte (49) und zwei Tiefpunkte (51) aufweist, die jeweils abwechselnd in einem Abstand von 90° zueinander angeordnet sind, wodurch auf dem Kreisbahnelement (47) jeweils zwei gegenüber liegende Aufwärts- und Abwärtsabschnitte (55, 53) ausgebildet sind,
wobei durch Zuführung von Arbeitsfluid (14) aus der ersten Arbeitsfluidquelle mittels der Zuführungssteuereinrichtung (37) die Arbeitskolben (19) der Aktoren, deren zugeordnete Rollelemente (35) sich auf einem der Abwärtsabschnitte (53) befinden, nach unten bewegt werden, und durch Zuführung von Arbeitsfluid (14) aus der zweiten Arbeitsfluidquelle mittels der Zuführungssteuereinrichtung (37) die Arbeitskolben (19) der Aktoren, deren zugeordnete Rollelemente (35) sich auf einem der Aufwärtsabschnitte (55) befinden, nach oben bewegt werden, derart dass eine Drehbewegung der Hauptwelle (28) bewirkt wird.

12. Wärmekraftmaschine (22) nach Anspruch 11, **dadurch gekennzeichnet, dass** die Tiefpunkte (51) auf der Grundplatte (25) liegen.

13. Wärmekraftmaschine (22) nach einem der Ansprüche 6 bis 12, **dadurch gekennzeichnet, dass** die Temperaturdifferenz zwischen dem Arbeitsfluid (14) in der ersten Arbeitsfluidquelle und dem Arbeitsfluid (14) in der zweiten Arbeitsfluidquelle zwischen 5°C und 60°C beträgt, und dass die niedrigste Temperatur des Arbeitsfluids ca. -15°C und die höchste Temperatur des Arbeitsfluids ca. 90°C beträgt.

14. Wärmekraftmaschine (22) nach einem der Ansprüche 11 bis 13, **dadurch gekennzeichnet, dass**
die Zuführungssteuereinrichtung (37) einen am Rahmen befestigten inneren Ring (63) und einen um den inneren Ring (63) herum drehbaren äußeren Ring (61) aufweist,
wobei der innere Ring (63) auf seiner Oberseite einen mit der ersten Arbeitsfluidquelle verbundenen ersten Einlass (73), einen mit der zweiten Arbeitsfluidquelle verbundenen zweiten Einlass (75), einen mit der ersten Arbeitsfluidquelle verbundenen ersten Auslass (77) und einen mit der zweiten Arbeitsfluidquelle verbundenen zweiten Auslass (79) aufweist,
wobei der äußere Ring (61) auf einer Vorlaufebene und einer Rücklaufebene jeweils sechs in Umfangsrichtung gleichmäßig beabstandete radial verlaufende Durchführungen (65) aufweist, wobei die Durchführungen (65) der Vorlaufebene auf der Außenseite des äußeren Rings (61) mit den Vorlaufleitungen (9) zu und die Durchführungen (65) der Rücklaufebene mit den Rücklaufleitungen (11) von den Arbeitszylindern (1) verbunden sind,
und im Inneren des inneren Rings (63) auf der Vorlaufebene zwei sich kreuzende, nicht verbundene Vorlaufkammern (67), deren Öffnungen (71) sich jeweils diagonal gegenüber liegen, und auf der Rücklaufebene zwei sich kreuzende, nicht verbundene Rücklaufkammern (69) ausgebildet sind, deren Öffnungen (71) sich jeweils diagonal gegenüber und unter den Öffnungen (71) der Vorlaufkammern (67) liegen.

15. Wärmekraftmaschine (22) nach Anspruch 14, **dadurch gekennzeichnet, dass** die Öffnungen (71) der Vorlaufkammern (67) und der Rücklaufkammern (69) derart ausgebildet sind, dass bei einer Drehung des äußeren Rings (61) mit Bezug auf den inneren Ring (63) auf der Vorlaufebene zu jedem Zeitpunkt Arbeitsfluid (14) von dem ersten (73) oder zweiten Einlass (75) über die Öffnungen (71) der Vorlaufkammern (67) in zwei gegenüber liegende Durchführungen (65) des äußeren Rings (61) und auf der Rücklaufebene zu jedem Zeitpunkt Arbeitsfluid (14) von zwei gegenüber liegenden Durchführungen (65) des äußeren Rings (61) in die Öffnungen (71) der Rücklaufkammern (69) und weiter aus dem ersten (77) oder zweiten Auslass (79) strömen kann.
